# EUROPÄISCHE PATENTSCHRIFT

(11) **EP 3 108 171 B1**
(45) Veröffentlichungstag und Bekanntmachung des Hinweises auf die Patenterteilung: **08.04.2020**
(21) Anmeldenummer: 15714164.9
(22) Anmeldetag: 20.02.2015
(51) Int. Cl.: F16L 33/32, A01C 7/08, A01C 7/20, F16L 37/14

(54) **SCHLAUCHSTECKSYSTEM EINER LANDWIRTSCHAFTLICHEN VERTEILMASCHINE**
HOSE CONNECTOR SYSTEM FOR AN AGRICULTURAL SPREADER MACHINE
SYSTÈME DE RACCORDEMENT DE TUYAU POUR MACHINE AGRICOLE D'ÉPANDAGE

(30) Priorität: 21.02.2014 DE 102014102247
(43) Veröffentlichungstag der Anmeldung: 28.12.2016
(73) Patentinhaber: Lemken GmbH & Co. KG, 46519 Alpen (DE)
(72) Erfinder: BERENDSEN, Mark, NL-7044 Lengel (NL); BERGERFURTH, Dennis, 46459 Rees (DE); GEBBEKEN, Martin, 46519 Alpen (DE); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE)
(86) Internationale Anmeldenummer: PCT/DE2015/100069
(87) Internationale Veröffentlichungsnummer: WO 2015/124148

(56) Entgegenhaltungen:
- US-A1- 2011 272 939

## Beschreibung

Die Erfindung betrifft ein Schlauchstecksystem einer landwirtschaftlichen Verteilmaschine gemäß dem Oberbegriff des Patentanspruches 1.

Die europäische Patentschrift EP 873 675 B2 zeigt eine landwirtschaftliche Verteilmaschine in Form einer pneumatischen Sämaschine. Aus einem Vorratsbehälter wird Saatgut in einen Gebläseluftstrom dosiert und gelangt durch ein Leitungssystem in einen oder mehrere Verteilerköpfe. Dort teilt sich der Saatgut-Luftstrom in einzelne flexible Schlauchleitungen auf, welche in die Ausbringeinrichtungen in Form von Säscharen führen. Allgemein bekannt ist die Befestigung der Schlauchleitungen mit Schlauchschellen auf den jeweiligen Anschlüssen. Da die Säschare sich im Betrieb jedoch schnell auf und ab bewegen, geraten die Schlauchleitungen in Schwingungen. Unmittelbar hinter der Schlauchklemme, wo die Schlauchleitungen eingeschnürt werden, tritt hier vorzeitiger Bruch der Schlauchleitungen auf. Zudem ist die Montage der Schlauchschellen unbequem und zeitaufwendig. Steckstifte, welche in einer anderen bekannten Lösung beiderseitig der Schlauchleitungsenden eingeschlagen werden, sichern den Schlauch gegen Abziehen und verkürzen die Montagezeit, schwächen den Schlauchwerkstoff aber ebenfalls an der Einschlagstelle. Es sind angespritzte Schlauchenden bekannt, welche die Schlauchleitungsenden partiell verstärken. Die damit ausgestatteten Schlauchleitungen sind jedoch nur vorkonfektioniert und nicht als Meterware verfügbar und im Reparaturfall nicht immer zeitnah zu beschaffen. In der deutschen Offenlegungsschrift DE10 205 466 A1 wird ein Schlauchkupplungsadapter vorgeschlagen, bei dem ein elastisches, formstabiles Schlauchende in die zylindrische Öffnung einer Kupplungsmuffe eingeschoben und mit deren Innenfläche verschraubt oder verklebt wird. Diese Form der Schlauchsicherung ist zeitaufwendig herzustellen und im Falle der Verklebung auch nicht mehr lösbar. In der deutschen Patentanmeldung DE 10 2007 047 689 A1 wird eine Schlauchbefestigung an einem Verteilerkopf beschrieben, wobei mehrere Spiralschläuche zwischen zwei Formhälften eines Verteilkopfes eingeklemmt werden. Da die Schläuche in ihrer Handhabung sehr sperrig sind, sind für die Montage mehrere Personen zum Einlegen der Schläuche und zur gleichzeitigen Montage der Formhälften erforderlich. Eine Montage durch eine einzelne Person wäre durch eine Montagevorrichtung möglich, welche aber zeitaufwendig zu bestücken und zu fixieren wäre. Ist der Verteilkopf mit Innentüllen zur Aufnahme der Schläuche versehen, um einen störungsfreien Partikelstrom in den Schlauch zu gewährleisten, scheidet diese vorgeschlagene Befestigung aus. Das deutsche Gebrauchsmuster DE 202 01 874 U1 zeigt ein elastisches Einsatzstück zur Befestigung von Metallwellschläuchen, welches sich durch Verpressen mittels Pressglied in die Wellrippen des Metallwellschlauches drückt und diesen gegenüber einem Gegenstück abdichtet und sichert. Die US-Offenlegung US 2011 0272939A1 zeigt eine Schneidringsicherung für eine Schlauchleitung mit zusätzlich erforderlicher Dichtung. Schneidkanten an der dort offenbarten Hülse können den Schlauch beschädigen, was Undichtigkeiten der Verbindung oder ein Ausreißen des Schlauches zur Folge hat.

Von daher stellt sich der Erfindung die Aufgabe, ein schnell und sicher zu montierendes Stecksystem für Schlauchleitungen an landwirtschaftlichen Verteilmaschinen zu schaffen, welches auch bei hohen Schwingungsbelastungen nicht ausreißt oder sich selbständig löst, dabei aber trotzdem einfach und kostengünstig zu montieren ist.

Diese Aufgabe wird durch die Merkmale des kennzeichnenden Teiles des Anspruches 1 gelöst.

Durch Aufschieben oder Aufpressen einer Außenhülse, welche in ihrem Innendurchmesser durch Erhebungen partiell verengt ist, auf das Ende einer elastischen Schlauchleitung drücken sich die Erhebungen in das teilweise elastische Material der Schlauchleitung ein. Hierdurch wird eine quasi formschlüssige und zugfeste Verbindung zwischen Schlauchleitung und Außenhülse erreicht. Die Außenhülse kann nun wiederum mit einer definierten Toleranz in die Stecköffnung eingeschoben und dort gegen Bewegung gesichert werden. Durch die Vormontage der Außenhülse und der Schlauchleitung vor der eigentlichen Verlegung in der Verteilmaschine ist eine einfache und fehlerfreie Montage gegeben., insbesondere wenn die Wandung der Schlauchleitung, vorzugsweise die Außenwandung mit spiralförmigen Elementen ausgebildet ist. Hierdurch kann die Außenhülse mit geringem Kraftaufwand auf die Schlauchleitungen aufgedreht werden. Dabei sind auch eine oder mehrere Erhebungen der Innenfläche der Außenhülse ebenfalls spiralförmig ausgebildet, wobei der Drehsinn mit jenem der spiralförmigen Elemente der Schlauchleitungen übereinstimmt. Hierdurch wird einerseits der Kraftaufwand für das Aufdrehen der Außenhülse auf die Schlauchleitung weiter verringert, andererseits die Zugfestigkeit der Verbindung zwischen Außenhülse und Schlauchleitung weiter verbessert.

In einer besonders geeigneten Ausführungsform der Erfindung weist die Außenhülse in vorwiegend axialer Richtung eine oder mehrere zumindest partielle Ausnehmungen oder Schlitze auf. Durch diese Ausnehmungen oder Schlitze weitet sich die Außenhülse in ihrem Durchmesser beim Aufschieben, Aufstecken oder Aufschrauben auf den Schlauch auf und erleichtert dieses. Beim anschließenden Einstecken der Außenhülse in die Stecköffnung mit definiertem Durchmesser klemmt die Außenhülse die Schlauchleitung mit den inneren Erhebungen noch besser ein und sichert die Schlauchleitung gegen Herausziehen.

In einer weiteren Erfindungsform sind die Stecköffnung und die Außenhülse gegen rotatorische Beweglichkeit zueinander arretierbar ausgebildet. Gerade bei spiralförmiger Ausbildung der Schlauchleitung und / oder der Erhebungen der Außenhülse wird ein unbeabsichtigtes Lösen der Verbindung auf einfache Art verhindert. Hierzu sind beispielsweise Nut-Federkombinationen ebenso geeignet wie von der Zylinderform abweichende Konturen wie beispielsweise Vier- oder Sechskant-Konturen, mit denen die zueinander wirkenden Flächen von Stecköffnung und Außenhülse zueinander korrespondierend ausgebildet sind.

Nach einer anderen Erfindungsform ist die Außenhülse in mehrere Teilstücke aufgeteilt. Hierdurch können die Teilstücke der Außenhülse annähernd kraftfrei auf die Schlauchleitung aufgelegt werden. Das anschließende Einschieben der Außenhülse bzw. deren Teilstücke in die Stecköffnung mit definiertem Durchmesser verpresst die Erhebungen der Außenhülse in die Schlauchleitung und bildet die quasi formschlüssige, zugsichere Verbindung zwischen Schlauchleitung und Außenhülse.

In einer weiteren Form der Erfindung sind die Teilstücke der Außenhülse zueinander scharnierend ausgebildet. Durch die Scharnierform der Außenhülse braucht diese nur noch an einer Stelle zusammengedrückt und in die Stecköffnung eingeschoben zu werden. Gerade die Verwendung eines Folienscharnieres, wie es aus dem Spritzguss bekannt ist, ermöglicht die günstige Herstellung einer einteiligen Außenhülse "aus einem Schuss" und trotzdem die Beweglichkeit der Hülsenbereiche zueinander.

Eine montagefreundliche Form der Erfindung ist dadurch gegeben, dass ein oder mehrere Teilstücke der Außenhülse mittels Einrastelementen zueinander formschlüssig miteinander fixierbar ausgebildet sind. Durch Anformen eines oder mehrerer elastischer Rastelemente oder Haken und korrespondierenden Ausnehmungen an der Außenhülse oder ihrer Teilstücke kann die Außenhülse sehr montagefreundlich und sicher auf den Schlauch "geklickt" werden.

In einer weiteren Erfindungsausbildung ist ein weiterer Steckadapter zur Aufnahme eines Mess- oder Steuermittels zur Befestigung in einen Aus- oder Einlass angeordnet, welcher wiederum an seinen eigenen Aus- oder Einlassöffnungen mit Stecköffnungen zur Aufnahme einer Außenhülse und eines Schlauches nach vorstehenden Ansprüchen ausgebildet ist. Durch diese Bauart wird eine einfache und modulare Montage beispielsweise eines Sensorkopfes zur Messung oder Beurteilung des Partikelstromes am Verteilkopf oder an der Ausbringeinrichtung ermöglicht. Ebenso ist die modulare Integration von Sperr- oder Wegeventilen möglich. Dabei ist ein Zusammenwirken dieser Einrichtungen mit einem Dosiercomputer zur Überwachung und Steuerung des Ausbringvorganges ebenfalls denkbar. Der Adapter kann auch mit einem Ein- und Auslass und zugehörigen Stecköffnungen innerhalb einer Schlauchleitung angeordnet werden, wozu diese dann unterbrochen und aufgeteilt wird.

Die Erfindung zeichnet sich insbesondere dadurch aus, dass in verblüffend einfacher Weise ein zugsicheres, sich nicht selbst lösendes, montagefreundliches und kostengünstiges Schlauchstecksystem für eine landwirtschaftliche Verteilmaschine bereitgestellt wird.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig.1: den schematischen Aufbau einer landwirtschaftlichen Verteilmaschine in Seitenansicht,
- Fig.2: den schematischen Aufbau einer Ausbringeinrichtung in Seitenansicht,
- Fig.3: einen Querschnitt durch einen Verteilkopf mit Auslässen und
- Fig.4: einen Querschnitt durch ein Element der Ausbringeinrichtung.

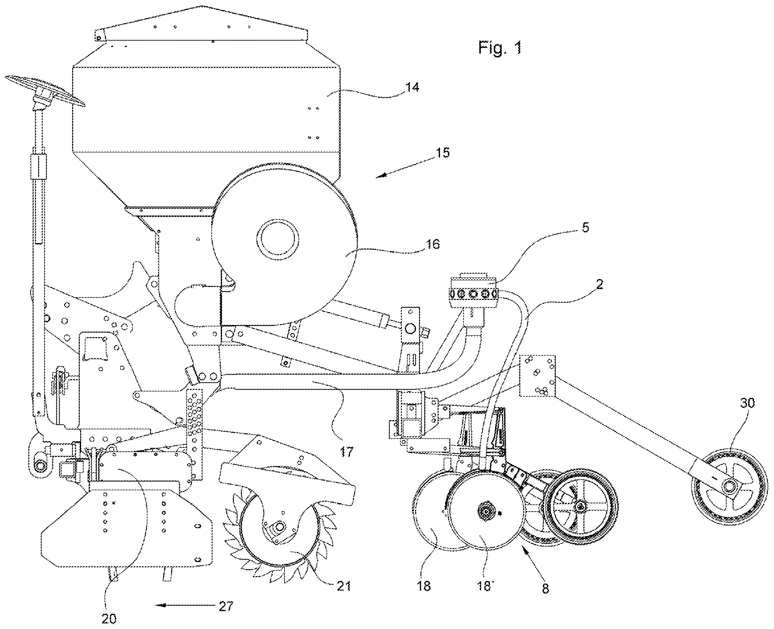

In Figur 1 ist eine landwirtschaftliche Verteilmaschine 15 dargestellt, welche hier auf eine Kreiselegge 20 mit Packerwalze 21 aufgesattelt ist. Kombinationen der Verteilmaschine 15 mit anderen Bodenbearbeitungsgeräten sind ebenso möglich wie ein Solobetrieb an einem hier nicht dargestellten Traktor. Der Traktor dient zugleich zum Antrieb und zur Fortbewegung der landwirtschaftlichen Verteilmaschine 15. Die landwirtschaftliche Verteilmaschine 15 kann mit einem Fahrwerk ausgestattet sein. In dem Behälter 16 wird Dünger- oder Saatgutmaterial mitgeführt, welches mit einer nicht dargestellten Dosiereinrichtung in Abhängigkeit der zurückgelegten Wegstrecke beim Betrieb der Verteilmaschine 15 in die Zuleitung 17 dosiert wird. Die zurückgelegte Wegstrecke wird über ein Tastrad 30, welches mit der Verteilmaschine 15 verbunden ist, an die Dosiereinrichtung übertragen. Dazu kann ein Dosiercomputer regelnd in die Einstellung sowie den Antrieb der Dosiereinrichtung eingreifen. Dabei sorgt das Gebläse 16 für einen Luftstrom, welcher das Material in den Verteilkopf 5 und von dort über mehrere Schlauchleitungen 2 in die jeweiligen Ausbringeinrichtungen 8 fördert.

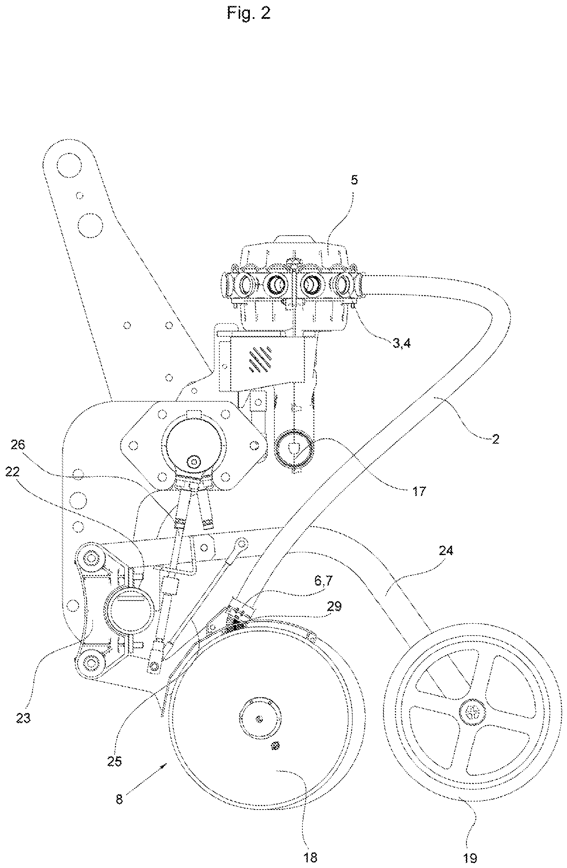

Figur 2 zeigt eine Ausbringeinrichtung 8. Diese ist in Form eines Doppelscheibenschars 18 dargestellt, wovon mehrere seitlich beabstandet nebeneinander an einem Querrahmen 22 angeordnet sind. Wie in Figur 1 ersichtlich, ist auch ein Versatz der Doppelscheibenschare 18 in Fahrtrichtung 27 möglich. Je ein Doppelscheibenschar 18 ist über ein Lagerelement 23 vertikal beweglich mit dem Querrahmen 22 verbunden. Die Tiefenführung zum Boden erfolgt über das Stützrad 19 und den Arm 24, welcher ebenfalls über das Lagerelement 23 mit dem Querrahmen 22 vertikal beweglich verbunden ist. Das Verbindungselement 25 in Form eines Zugseiles führt das Doppelscheibenschar 18 und den Arm 24 mit Stützrad 19 annähernd parallel in der Höhe zum Boden. Durch das Eindruckelement 26 kann eine Druckkraft auf das Doppelscheibenschar 18 ausgeübt werden, wodurch dieses mit seinen schräg angestellten, rotierenden Scheiben in die Bodenoberfläche eindringt und eine Rille zur Ablage des Saatgutes oder des Düngers bildet.

Wie bereits in Figur 1 beschrieben, wird durch die Zuleitung 17 ein Luft-Materialgemisch vertikal nach oben in den Verteilkopf 5 geblasen. Über einen nicht dargestellten Kegel wird der Luft-Materialstrom als Partikelstrom gleichmäßig auf alle Auslässe 4 verteilt und über die Schlauchleitung 2 in die jeweiligen Ausbringeinrichtungen 8 gefördert. Dabei können einzelne Auslässe 4 abgesperrt werden, um beispielsweise Fahrgassen anzulegen oder Teilbreiten zu schalten.

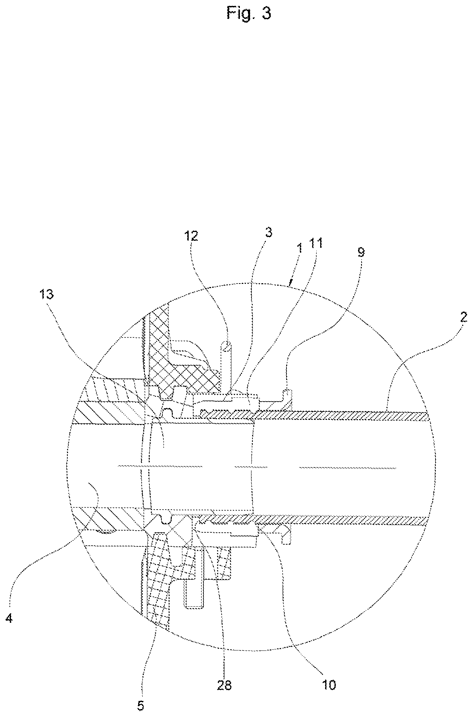

In Figur 3 ist das eigentliche Schlauchstecksystem 1 in einem Querschnitt durch einen Teil des Verteilerkopfes 5 dargestellt. Der Partikelstrom wird aus dem Verteilerkopf 5 durch den Auslass 4 in die Schlauchleitung 2 geblasen. Damit der Partikelstrom nicht durch das Ende der Schlauchleitung 2 gestört oder gebremst wird, ist eine Tülle 13 in den Auslass 4 eingesetzt, welche in die Schlauchleitung 2 hineinragt, und somit einen kollisionsfreien Partikelstrom ermöglicht. Diese Tülle 13 kann auch Bestandteil des Verteilerkopfes 5 sein. Auf die Schlauchleitung 2 ist die Außenhülse 9 aufgesteckt oder aufgeschraubt, wobei eine vordere Anschlagkante 28 ein vollständiges und fehlerfreies Aufschieben der Außenhülse 9 auf die Schlauchleitung 2 gewährleistet. Die Außenhülse 9 ist im hinteren Bereich der Innendurchmesserfläche auf der Innenkante umlaufend abgerundet, um vorzeitigem Verschleiß und Bruch der Schlauchleitungen 2 vorzubeugen. Auch ein trompetenförmiger Ansatz oder den Schlauch stabilisierende, elastische Fortsatzelemente sind denkbar. Im vorderen Bereich der schraffiert sichtbaren Außenhülse 9 ist nicht schraffiert der Schlitzbereich 11 als Ausnehmung in Längsrichtung der Außenhülse 9 erkennbar. Dieser weitet sich beim Aufschieben der Außenhülse 9 auf die Schlauchleitung 2 geringfügig auf und erleichtert das Aufschieben. Beim Einstecken der Außenhülse 9 mit der montierten Schlauchleitung 2 in die Stecköffnung 3 können diese nun passgenau bis zum dichtenden Anstoß der Vorderkante 28 der Außenhülse 9 gegen die Innenkante der Stecköffnung 3 bzw. des Verteilerkopfes 5 angeschlagen werden. Durch die Arretierung 12 in Form eines Drahtbügels oder mit Steckstiften, welche vorzugsweise vertikal durch passende Bohrungen im Verteilerkopfgehäuse 5 die Zylinderfläche der Stecköffnung 3 tangieren oder durchdringen, wird die Außenhülse 9 mit einer korrespondierenden, umlaufenden Nut oder tangierenden Schlitzen axial gesichert und festgesetzt. Auch andere Sicherungssysteme sind denkbar, wie beispielsweise selbsttätig einhakende Clips. Durch passend gewählte Durchmessertoleranzen von Außenhülse 9 und Stecköffnung 3 drückt sich die Außenhülse 9 in ihrer ganzen Länge auf einen definierten Innendurchmesser zusammen. Die auf der Innendurchmesserfläche der Außenhülse 9 angebrachten Erhebungen 10 drücken sich fest in die Schlauchleitung 2 ein und stellen die quasi formschlüssige Verbindung zwischen Schlauchleitung und Außenhülse 9 her. Im Schlitzbereich 11 der Außenhülse 9 ist zudem eine Feder erhaben angeformt, welche mit einer dazu passenden Nut in der Fläche der Stecköffnung 3 eine axiale Verdrehung der Komponenten zueinander verhindert.

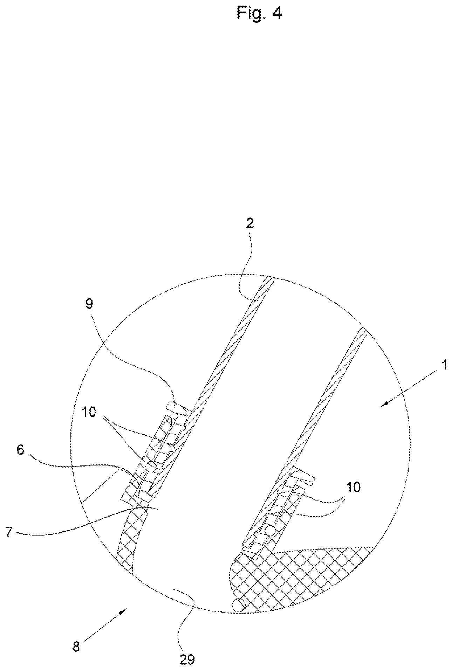

Figur 4 zeigt einen Teilquerschnitt durch den Einlass 7 der Ausbringeinrichtung 8, hier ein Kanalelement 29, welches den Dünger oder das Saatgut als Partikelstrom aus der Schlauchleitung 2 durch den Einlass 7 und das Doppelscheibenschar 18 hindurch bis in die Nähe der durch das Doppelscheibenschar 18 gebildete Bodenrille leitet. In analoger Weise zur Figurenbeschreibung 3 ist die Außenhülse 9 bis zur Anschlagkante auf die Schlauchleitung 2 aufgeschoben und die Einheit aus Außenhülse 9 und Schlauchleitung 2 in die Stecköffnung 6 des Einlasses 7 eingeschoben. Auf eine Innentülle kann hier verzichtet werden, es muss lediglich darauf geachtet werden, dass die an die Stecköffnung 6 anschließende Innenkontur des Kanals 29 größer ausgeführt ist als die Innenweite der Schlauchleitung 2, um einen einwandfreien Partikelstrom ohne störende Kanten zu gewährleisten.

## Patentansprüche

1. Schlauchstecksystem (1) einer landwirtschaftlichen Verteilmaschine (15) zum Ausbringen von granuliertem oder gekörntem Material wie Dünger oder Saatgut, wobei das Material durch formstabile Schlauchleitungen (2) transportiert wird, wobei ein Ende der Schlauchleitung (2) in eine Stecköffnung (3) an einen Auslass (4) eingesteckt ist und das andere Ende der Schlauchleitung (2) in eine Stecköffnung (6) an einen Einlass (7) eingesteckt ist, wobei zumindest ein Ende der Schlauchleitung (2) mit einer weiteren Außenhülse (9) versehen ist, welche lösbar auf das Ende der Schlauchleitung aufgesteckt ist und zumindest teilweise in eine Stecköffnung (3, 6) am Einlass (7) oder Auslass (4) hineinragt, wobei die Stecköffnung (3, 6) und die Außenhülse (9) gegen axiale Beweglichkeit zueinander arretierbar ausgebildet sind, wobei die Innenfläche der Außenhülse (9) eine oder mehrere Erhebungen (10) aufweist, welche den lichten Innendurchmesser der Außenhülse (9) bilden und der lichte Innendurchmesser der Außenhülse (9) im eingesteckten Zustand kleiner ist als der Nenndurchmesser der Außenfläche der Schlauchleitung (2), wobei sich die Außenhülse (9), welche in ihrem Innendurchmesser durch Erhebungen partiell verengt ist, mit ihren Erhebungen in das teilweise elastische Material der Schlauchleitung (2) eindrückt,
**dadurch gekennzeichnet, dass** die Wandung der Schlauchleitung (2), vorzugsweise die Außenwandung mit spiralförmigen Elementen ausgebildet ist und eine oder mehrere Erhebungen (10) der Innenfläche der Außenhülse (9) ebenfalls spiralförmig ausgebildet sind, wobei der Drehsinn mit jenem der spiralförmigen Elemente der Schlauchleitungen übereinstimmt.

2. Schlauchstecksystem nach Anspruch 1, **dadurch gekennzeichnet,**
**dass** die Außenhülse (9) in axialer Richtung eine oder mehrere, zumindest partielle Ausnehmungen oder Schlitze (11) aufweist.

3. Schlauchstecksystem nach vorstehenden Ansprüchen,
**dadurch gekennzeichnet,**
**dass** die Stecköffnung (3,6) und die Außenhülse (9) gegen rotatorische Beweglichkeit zueinander arretierbar ausgebildet sind.

4. Schlauchstecksystem nach vorstehenden Ansprüchen,
**dadurch gekennzeichnet,**
**dass** die Außenhülse (9) in mehrere Teilstücke aufgeteilt ist.

5. Schlauchstecksystem nach vorstehenden Ansprüchen,
**dadurch gekennzeichnet,**
**dass** die Teilstücke der Außenhülse zueinander scharnierend ausgebildet sind.

6. Schlauchstecksystem nach vorstehenden Ansprüchen,
**dadurch gekennzeichnet,**
**dass** ein oder mehrere Teilstücke der Außenhülse mittels Einrastelementen zueinander formschlüssig miteinander fixierbar ausgebildet sind.

7. Schlauchstecksystem nach vorstehenden Ansprüchen,
**dadurch gekennzeichnet,**
**dass** ein weiterer Steckadapter zur Aufnahme eines Mess- oder Steuermittels zur Befestigung in dem Aus- oder Einlass (4,7) angeordnet ist, welcher wiederum an seinen Aus- oder Einlassöffnungen mit Stecköffnungen zur Aufnahme einer Außenhülse (9) und eines Schlauches (2) nach vorstehenden Ansprüchen ausgebildet ist.

8. Landwirtschaftliche Verteilmaschine mit einem oder mehreren Schlauchstecksystemen (1) nach vorstehenden Ansprüchen.

## Claims

1. Hose connector system (1) for an agricultural distributing machine (15) for distributing granulated or grainy material such as fertiliser or seeds, whereby the material is transported through dimensionally stable hose lines (2), whereby one end of the hose line (2) is inserted into an opening (3) at an outlet (4) and the other end of the hose line (2) is inserted into an opening (6) at an inlet (7), whereby at least one end of the hose line (2) is fitted with an additional outer sleeve (9), which is placed detachably onto the end of the hose line and projects at least partially into an opening (3, 6) at the inlet (7) or outlet (4), whereby the opening (3, 6) and the outer sleeve (9) are designed to be lockable towards each against axial movability, whereby the inside surface of the outer sleeve (9) has one or more elevations (10) that form the clear inside diameter of the outer sleeve (9) and the clear inside diameter of the outer sleeve (9) is less than the nominal diameter of the outer surface of the hose line (2) in the inserted state, whereby the outer sleeve (9), whose internal diameter is partially constricted by elevations, presses with its elevations into the partially elastic material of the hose line (2).
**caracterised in that**
the wall of the hose line (2), preferably the outer wall, is designed with spiral elements and one or more elevations (10) of the inside surface of the outer sleeve (9) are also designed with a spiral shape, whereby the spiral direction corresponds to that of the spiral elements of the hose lines.

2. Hose connector system in accordance with claim 1,
**caracterised in that**
the outer sleeve (9) has one or more at least partial recesses or slots (11) in an axial direction.

3. Hose connector system in accordance with previous claims,
**caracterised in that**
the opening (3, 6) and the outer sleeve (9) are designed to be lockable towards one another against rotatory movability.

4. Hose connector system in accordance with previous claims,
**caracterised in that**
the outer sleeve (9) is divided into in several sections.

5. Hose connector system in accordance with previous claims,
**caracterised in that**
the sections of the outer sleeve are designed hinged towards each other.

6. Hose connector system in accordance with previous claims,
**caracterised in that**
one or more sections of the outer sleeve are designed to be fixable with each other positively by means of snap-in elements.

7. Hose connector system in accordance with previous claims,
**caracterised in that**
there is an additional coupling adapter for holding a measuring or control device for fastening in the outlet or inlet (4, 7), which has openings at its outlet or inlet openings for holding an outer sleeve (9) and a hose (2) in accordance with the above claims.

8. Agricultural distribution machine with one or more hose connector systems (1) in accordance with the previous claims.

## Revendications

1. Système d'enfichage de tuyau (1) d'une machine distributrice agricole (15) pour l'épandage de matériaux granulés ou à grain tels que de l'engrais ou des semences, le matériau étant transporté par des conduites flexibles (2) aux dimensions stables, dans laquelle une extrémité de la conduite flexible (2) est enfichée dans une ouverture enfichable (3) à une sortie (4) et l'autre extrémité de la conduite flexible (2) est enfichée dans une ouverture enfichable (6) à une entrée (7), au moins une extrémité de la conduite flexible (2) étant munie d'un autre manchon extérieur (9) qui est enfiché de manière amovible sur l'extrémité de la conduite flexible et est au moins partiellement enfichée dans une ouverture enfichable (3, 6) fait saillie dans l'entrée (7) ou la sortie (4), l'ouverture enfichable (3, 6) et le manchon extérieur (9) étant conçus de manière à pouvoir être verrouillés l'un par rapport à l'autre contre un mouvement axial, la surface intérieure du manchon extérieur (9) ayant une ou plusieurs élévations (10), qui forment le diamètre intérieur clair du manchon extérieur (9) et le diamètre intérieur clair du manchon extérieur (9) à l'état inséré est inférieur au diamètre nominal de la surface extérieure de la conduite flexible (2), le manchon extérieur (9), qui est partiellement rétréci dans son diamètre intérieur par des élévations, s'enfonçant avec ses élévations dans le matériau partiellement élastique de la conduite flexible (2),
**caractérisé**
**en ce que** la paroi de la conduite flexible (2), de préférence la paroi extérieure, est formée d'éléments en forme de spirale et une ou plusieurs élévations (10) de la surface intérieure du manchon extérieur (9) sont également formées en spirale, le sens de rotation coïncidant avec celui des éléments en spirale des conduites flexibles.

2. Système d'enfichage de tuyau selon la revendication 1,
**caractérisé**
**en ce que** le manchon extérieur (9) présente un ou plusieurs évidements ou fentes au moins partiels (11) dans la direction axiale.

3. Système d'enfichage de tuyau selon les revendications ci-dessus,
**caractérisé**
**en ce que** l'ouverture enfichable (3, 6) et le manchon extérieur (9) sont conçus de telle sorte qu'ils peuvent être verrouillés l'un par rapport à l'autre contre une mobilité rotative.

4. Système d'enfichage de tuyau selon les revendications ci-dessus,
**caractérisé**
**en ce que** le manchon extérieur (9) est divisé en plusieurs sections.

5. Système d'enfichage de tuyau selon les revendications ci-dessus,
**caractérisé**
**en ce que** les sections du manchon extérieur sont articulées les unes aux autres.

6. Système d'enfichage de tuyau selon les revendications ci-dessus,
**caractérisé**
**en ce qu'**une ou plusieurs sections du manchon extérieure peuvent être fixées l'une à l'autre par des éléments d'encliquetage à verrouillage positif.

7. Système d'enfichage de tuyau selon les revendications ci-dessus,
**caractérisé**
**en ce qu'**un autre adaptateur enfichable destiné à recevoir un moyen de mesure ou de commande pour la fixation est disposé dans la sortie ou l'entrée (4, 7), qui à son tour est formé sur ses ouvertures de sortie ou d'entrée avec des ouvertures enfichables pour recevoir un manchon extérieur (9) et un tuyau (2) en fonction des revendications en saillie.

8. Distributeur agricole avec un ou plusieurs systèmes d'enfichage de tuyau (1) selon les revendications ci-dessus.
